# EUROPEAN PATENT SPECIFICATION

(11) **EP 3 028 929 B1**
(45) Date of publication and mention of the grant of the patent: **12.06.2019**
(21) Application number: 14196193.8
(22) Date of filing: 04.12.2014
(51) Int. Cl.: B62J 1/10

(54) **Bicycle saddle**
Fahrradsattel
Selle de bicyclette

(43) Date of publication of application: 08.06.2016
(73) Proprietor: Hsu, Chung-Ying, Taichung City 420 (TW); Lai, Chien-Shun, Changhua City 500 (TW); Lee, Chia-Wen, Huatan Township 503 (TW)
(72) Inventor: Hsu, Chung-Ying, Taichung City 420 (TW); Lai, Chien-Shun, Changhua City 500 (TW); Lee, Chia-Wen, Huatan Township 503 (TW)
(74) Representative: Straus, Alexander

(56) References cited:
- GB-A- 623 159
- GB-A- 914 345
- GB-A- 2 268 454

## Description

### BACKGROUND OF THE INVENTION

### 1. Technical Field

The present invention relates to bicycles, and more particularly to a bicycle saddle.

### 2. Description of Related Art

Generally, bicycle saddles are made of leather or plastic. Therein, leather saddles tend to lose tension or even sink over time due to cyclists' body weight and road vibration. Without proper correction, the loose saddles can have adverse effects on riding comfort.

For addressing this problem, Taiwan Patent No. M295609 uses the rotation of a fasten bolt to drive a guiding piece to move forward and backward, which in turn drives a bracket to adjust the surface tension of the cushion. However, in this patent, the bracket has a yoke retained in an receiving recess in the guiding piece by the fastening bolt, and such configuration tends to generate noise during cycling because the bracket rub against the guiding piece. Also the retaining force applied to the bracket is limited, so the bracket can transversely move when receiving excess external force, and degrading the stability of the overall structure
Prior art document GB-A-2268454 also addresses the above mentioned problem.

### BRIEF SUMMARY OF THE INVENTION

The primary objective of the present invention is to provide a bicycle saddle that is more structurally stable and has less noise as compared to the prior art.

For achieving the foregoing objective, in a first embodiment of the present invention defined in claim 1, the saddle comprises a leather cushion, a rail, and an adjusting assembly. The rail supports the leather cushion from below. The rail has its front end provided with an upward-extending portion and a retaining bay defined by the upward-extending portion. The rail has its rear end fixed to the rear end of the leather cushion. The adjusting assembly is affixed to the bottom surface of the leather cushion and has a bolt holder, an adjusting bolt, and an adjusting seat. The bolt holder is fixed to the leather cushion's front end and has a retaining wall and a through hole penetrating the retaining wall. The adjusting bolt has a bolt head and a threaded trunk. The bolt head abuts against the retaining wall of the bolt holder and is rotatably received in the through hole of the bolt holder. The threaded trunk has one end connected to the bolt head. The adjusting seat is fixed to the upward-extending portion of the rail and is retained in the retaining bay of the rail. Thereby, the bicycle saddle is more structurally stable and has less noise as compared to the prior art. In addition, the adjusting seat has a threaded hole that is screwed and engaged with the threaded trunk of the adjusting bolt. Thus, when the adjusting bolt rotates, the adjusting seat drives the rail to move, and in turn tension or relax the leather cushion, thereby adjusting the tension of the saddle.

In the first embodiment of the present invention, the adjusting seat has a seat body and an internally-threaded bushing. The seat body abuts against one side of the upward-extending portion of the rail and has an axial hole that is communicated with the retaining bay of the rail. The internally-threaded bushing has a bushing head and a bushing trunk connected to the bushing head. The bushing head abuts against a reverse side of the upward-extending portion of the rail. The bushing trunk passes through the retaining bay of the rail and is fixed in the axial hole of the seat body. The internally-threaded bushing has the threaded hole passing through the bushing head and the bushing trunk. Thereby, the seat body of the adjusting seat and the bushing head of the internally-threaded bushing of the adjusting seat sandwich the upward-extending portion of the rail therebetween. Moreover, the bushing trunk of the internally-threaded bushing of the adjusting seat retained in the retaining bay of the rail prevents the rail from transverse movement, thereby improving the structural stability of the rail.

In the first embodiment of the present invention, the rail has two opposite supporting arms having their front ends connected together so as to form the upward-extending portion. The seat body of the adjusting seat has its bottom formed with two abreast guiding channels. Each of the guiding channels fittingly receives one said supporting arm of the rail, thereby by strengthening the combination between the adjusting seat and the rail.

In the first embodiment of the present invention, the rail further has a propping portion that is fixed to the leather cushion's rear end and has two salients. Each of the salient has a fixing hole. Each said supporting arm has its rear end provided with an inserting segment and a flange adjacent to the inserting segment. The inserting segment is inserted into the fixing hole of the salient of the propping portion. The flange abuts against the end surface of the salient of the propping portion, for sharing the load born by the propping portion.

In the first embodiment of the present invention, each of the supporting arms of the rail has a peripheral groove formed around the inserting segment. The rail further has two C-clips. Each said C-clip is inlaid in one said peripheral groove and props against the wall of the fixing hole of the salient of the propping portion, for strengthening the combination between the propping portion and the two supporting arms.

Additionally, in a second embodiment of the present invention defined in independent claim 6, the saddle has a leather cushion, a rail, and an adjusting assembly. The rail supports the leather cushion from below. The rail's front end has a fastening block that includes a threaded hole. The rail's rear end is fixed to the leather cushion's rear end. The adjusting assembly is affixed to a bottom surface of the leather cushion and has a bolt holder and an adjusting bolt. The bolt holder is fixed to the leather cushion's front end and has a retaining wall and a through hole penetrating the retaining wall. The adjusting bolt has a bolt head and a threaded trunk. The bolt head abuts against the retaining wall of the bolt holder and is rotatably received in the through hole of the bolt holder. The threaded trunk has one end connected to the bolt head, and an opposite end screwed into the threaded hole of the fastening block of the rail. Thereby, when the adjusting bolt rotates, its screwed combination between the fastening block of the rail can drive the rail to move, thereby tensioning or relaxing the leather cushion.

### BRIEF DESCRIPTION OF THE SEVERAL VIEWS OF THE DRAWINGS

FIG. 1 is a perspective view of a first embodiment of the present invention.
FIG. 2 is an exploded view of the first embodiment of the present invention.
FIG. 3 is a bottom view of the first embodiment of the present invention.
FIG. 4 is a partial, cross-sectional view of the first embodiment of the present invention, showing the relationship between the rail and the adjusting assembly.
FIG. 5 is another partial, cross-sectional view of the first embodiment of the present invention, showing the relationship between the propping portion and the supporting arms of the rail.
FIG. 6 is an exploded view of a second embodiment of the present invention.
FIG. 7 is a partial, cross-sectional view of the second embodiment of the present invention.

### DETAILED DESCRIPTION OF THE INVENTION

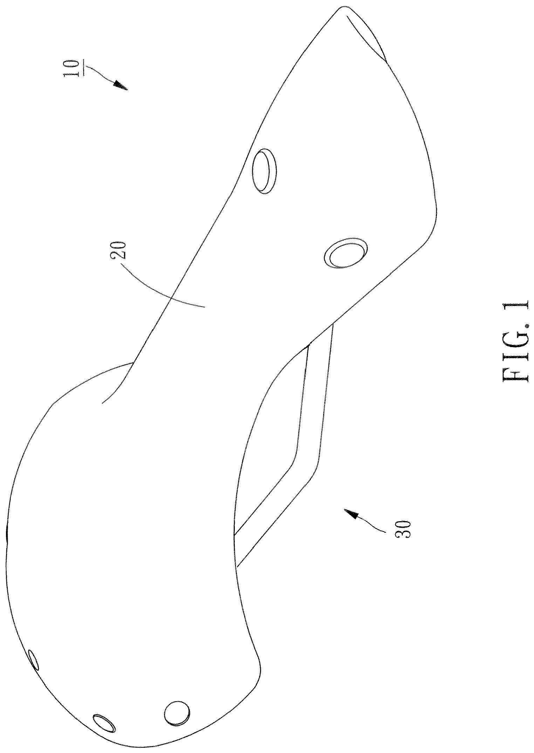

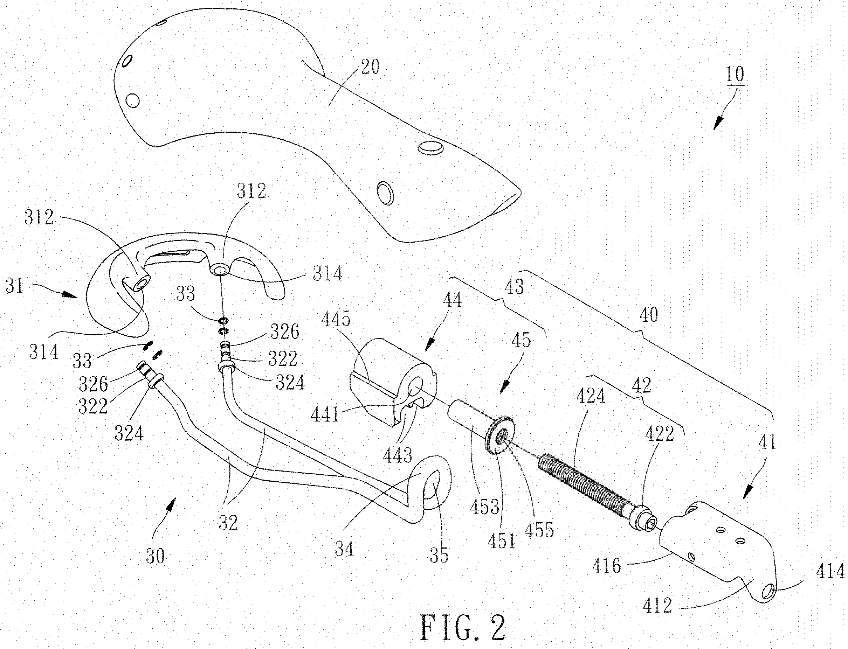

Referring to FIG. 1 and FIG. 2, according to the present invention, a bicycle saddle 10 comprises a leather cushion 20, a rail 30, and an adjusting assembly 40.

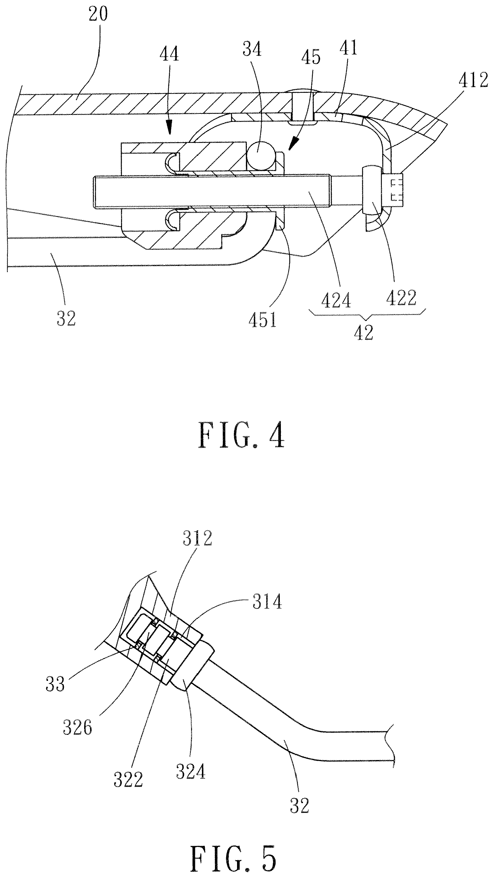

The rail 30 supports the leather cushion 20 from below and has a propping portion 31, two opposite supporting arms 32, and four C-clips 33. The propping portion 31 is screwed to a rear end of the leather cushion 20 and has two salients 312. Each said salient 312 has a fixing hole 314. The two supporting arms 32 have their front end connected together to form an upward-extending portion 34 and a retaining bay 35 defined by the upward-extending portion 34. Each of the two supporting arms 32 has a rear end provided with a inserting segment 322, a flange 324 adjacent to the inserting segment 322, and two peripheral grooves 326 formed on the surface of the inserting segment 322. Each of the C-clips 33 is inlaid into one said peripheral groove 326 of the supporting arms 32. To assemble the components, the inserting segments 322 of the supporting arms 32 are first inserted into the fixing holes 314 of the salients 312 of the propping portion 31 so that the flange 324 of each said supporting arm 32 abuts against the end surface of the corresponding salient 312 of the propping portion 31, as shown in FIG. 5. After the insertion, each the C-clips 33 radially expands by nature and props against the wall of the corresponding fixing hole 314, thereby combining the propping portion 31 and the supporting arms 32 together.

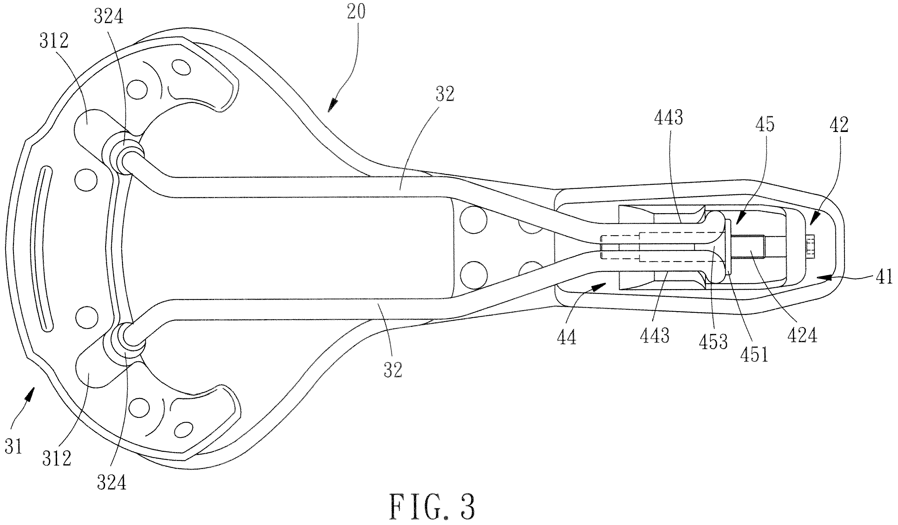

The adjusting assembly 40 is affixed to the bottom surface of the leather cushion 20 and has a bolt holder 41, an adjusting bolt 42, and an adjusting seat 43. As shown in FIG. 2 through FIG. 4, the bolt holder 41 is screwed to a front end of the leather cushion 20. The bolt holder 41 has its front end provided with a retaining wall 412 and a through hole 414 penetrating the retaining wall 412. The bolt holder 41 has its left and right laterals each provided with a contacting portion 416. The adjusting bolt 42 has a bolt head 422 and a threaded trunk 424. The bolt head 422 abuts against the retaining wall 412 of the bolt holder 41 and is rotatably received in through hole 414 of the bolt holder 41. The threaded trunk 424 has one end connected to the bolt head 422. The adjusting seat 43 has a seat body 44 that is made of plastic and has an axial hole 441 running through two ends thereof. In addition, the seat body 44 has a bottom formed with two abreast guiding channels 443. The seat body 44 has each of its left and right laterals formed with a guiding step 445. To assemble the components, the seat body 44 has its guiding channels 443 fittingly receiving the supporting arms 32 of the rail 30 so that the end surface of the seat body 44 abuts against one side of the upward-extending portion 34 of the rail 30. At this time, the axial hole 441 is aligned and communicated with the retaining bay 35 of the rail 30, and the seat body 44 has the guiding steps 445 contacting the contacting portions 416 of the bolt holder 41 closely. Furthermore, the adjusting seat 43 has an internally-threaded bushing 45. The internally-threaded bushing 45 is made of metal and has a bushing head 451, a bushing trunk 453 connected to the bushing head 451, and a threaded hole 455 passing through the bushing head 451 and the bushing trunk 453. To assemble the components, the internally-threaded bushing 45 has the bushing trunk 453 passing through the retaining bay 35 of the rail 30 and inserted into the axial hole 441 of the seat body 44, and riveted to the seat body 44. After the foregoing assembling work, the bushing head 451 of the internally-threaded bushing 45 abuts against a reverse side of the upward-extending portion 34 of the rail 30 while the threaded trunk 424 of the adjusting bolt 42 is screwed and received in the threaded hole 455 of the internally-threaded bushing 45. Thereby, when the adjusting bolt 42 rotates, the adjusting seat 43 drives the rail 30 to move forward or backward stably in virtue of the relationship between the guiding steps 445 and the contacting portions 416 of the bolt holder 41. By moving the rail 30 forward or backward, the surface tension of the leather cushion 20 is changed.

With the configuration given above, the disclosed bicycle saddle 10 is superior to the prior art for having the following advantages.

First, as to the structural relationship between the rail 30 and the adjusting seat 43, the upward-extending portion 34 of the rail 30 is sandwiched between the seat body 44 of the adjusting seat 43 and the bushing head 451 of the internally-threaded bushing 45 of the adjusting seat 43, so that when driven by the adjusting bolt 42, the adjusting seat 43 can stably drive the rail 30 to move forward or backward. Meanwhile, the bushing trunk 453 of the internally-threaded bushing 45 of the adjusting seat 43 retains in the retaining bay 35 of the rail 30 prevents the rail 30 from transverse movement. Thereby, the saddle is unlikely to sway and remains structurally stable, and the rail 30 is unlikely to generate noise during cycling.

Second, during cycling, the propping portion 31 of the rail 30 receives the weight of the cyclist through the leather cushion 20 and receives road vibration, and since the salients 312 of the propping portion 31 of the rail 30 abut against the flanges 324 of the supporting arms 32 of the rail 30, the supporting arms 32 of the rail 30 can share the force exerted on the propping portion 31 of the rail 30, thereby improving the structural strength and robustness of the rail 30.

Third, as to the structure of the rail 30, the combination between the fixing holes 314 of the salients 312 of the propping portion 31 and the inserting segments 322 of the supporting arms 32 is secured by the C-clips 33 propping therebetween, and therefore is significantly improved as compared to the tradition approach where only loose or tight fit is implemented. As a result, the structural stability is ensured.

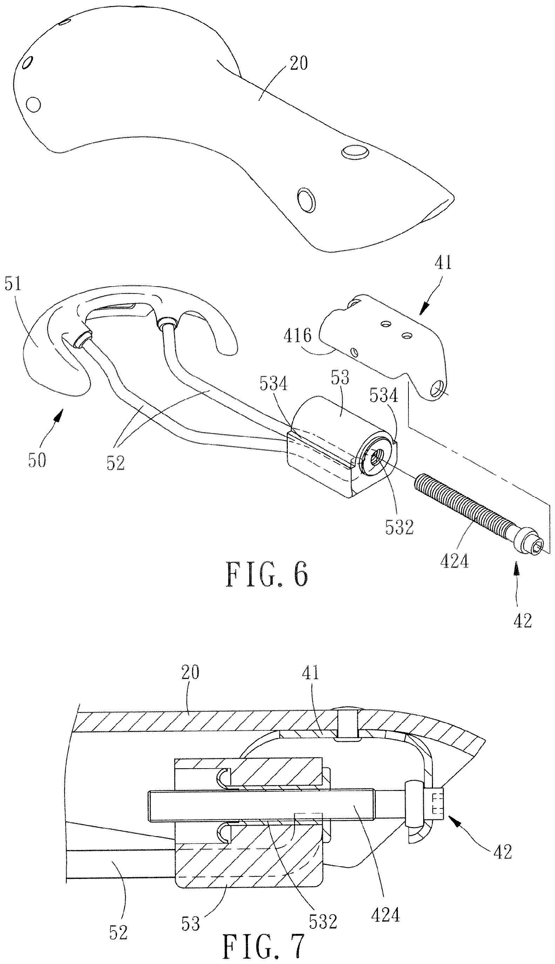

On the other hand, the disclosed rail may be structurally modified. As shown in FIG. 6 and FIG. 7, in a second embodiment, the front ends of the supporting arms 52 of the rail 50 is wrapped and positioned by a fastening block 53. The fastening block 53 has a threaded hole 532 running through two ends thereof. The threaded hole 532 receives the threaded trunk 424 of the adjusting bolt 42. The fastening block 53 has its right and left laterals each formed with a guiding step 534. The guiding steps 534 contact the contacting portions 416 of the bolt holder 41 closely so that the bolt holder 41 is allowed to slide forward and backward against the fastening block 53 stably. Thereby, when the adjusting bolt 42 rotates, its screwed combination between the fastening block 53 of the rail 50 drives the rail 50 to move forward and backward, so as to change the surface tension of the leather cushion 20. Since the propping portion 51 of the rail 50 and the rear ends of the supporting arms 52 of the rail 50 are combined in the same way as described in the first embodiment, the detailed description is herein omitted.

## Claims

1. A bicycle saddle (10), comprising:
a leather cushion (20);
a rail (30), supporting the leather cushion (20) from below, having a rear end fixed to a rear end of the leather cushion (20); and
an adjusting assembly (40), being affixed to a bottom surface of the leather cushion (20), and having a bolt holder (41), an adjusting bolt (42), and an adjusting seat (43), the bolt holder (41) being fixed to a front end of the leather cushion (20) and having a retaining wall (412) and a through hole (414) penetrating the retaining wall (412), the adjusting bolt (42) having a bolt head (422) and a threaded trunk (424), the bolt head (422) abutting against the retaining wall (412) of the bolt holder (41) and being rotatably received in the through hole (414) of the bolt holder (41), the threaded trunk (424) having one end connected to the bolt head (422), and the adjusting seat (43) having a threaded hole (455) that engages with and receives the threaded trunk (424) of the adjusting bolt (42);
**characterized in that**
the rail (30) has a front end provided with an upward-extending portion (34) and a retaining bay (35) defined by the upward-extending portion (34);
the adjusting seat (43) is fixed to the upward-extending portion (34) of the rail (30)and retained by the retaining bay (35) of the rail (30); and
the adjusting seat (43) has a seat body (44) and an internally-threaded bushing (45), the seat body (44) abutting against one side of the upward-extending portion (34) of the rail (30) and having an axial hole (441), the axial hole (441) being communicated with the retaining bay (35) of the rail (30), the internally-threaded bushing (45) having a bushing head (451) and a bushing trunk (453) connected to the bushing head (451), the bushing head (451) abutting against a reverse side of the upward-extending portion (34) of the rail (30), the bushing trunk (453) passing through the retaining bay (35) of the rail (30) and then being fixedly received in the axial hole (441) of the seat body (44), the internally-threaded bushing (45) having the threaded hole (455), and the threaded hole (455) passing through the bushing head (451) and the bushing trunk (453).

2. The bicycle saddle (10) of claim 1, wherein the rail (30) has two opposite supporting arms (32), the two supporting arms (32) having front ends thereof connected together to form the upward-extending portion (34), the seat body (44) of the adjusting seat (43) having a bottom provided with two abreast guiding channels (443), and the supporting arms (32) fittingly received in the guiding channels (443).

3. The bicycle saddle (10) of claim 2, wherein the rail (30) further has a propping portion (31), the propping portion (31) being fixed to the rear end of the leather cushion (20) and having two salients (312), each said salient (312) having a fixing hole (314), each said supporting arm (32) having a rear end that has an inserting segment (322) and a flange (324) adjacent to the inserting segment (322), the inserting segments (322) being inserted into the fixing holes (314) of the salients (312) of the propping portion (31), and the flanges (324) abutting against end surfaces of the salients (312) of the propping portion (31).

4. The bicycle saddle (10) of claim 3, wherein each said supporting arm (32) of the rail (30) has a peripheral groove (326) formed around the inserting segment (322), and the rail (30) further includes two C-clips (33) each being inlaid in one said peripheral groove (326) and abutting a wall of the fixing hole (314) of the corresponding salient (312) of the propping portion (31).

5. The bicycle saddle (10) of claim 1, wherein the bolt holder (41) has two opposite laterals each provided with a contacting portion (416), and the seat body (44) of the adjusting seat (43) has two opposite laterals each provided with a guiding step (445), in which the guiding steps (445) contact the contacting portions (416) of the bolt holder (41) closely and slidably.

6. A bicycle saddle (10), comprising:
a leather cushion (20);
a rail (50), supporting the leather cushion (20) from below, wherein the rail (50) has a front end provided with a fastening block (53) that has a threaded hole (532), and the rail (50) has a rear end fixed to the a rear end of the leather cushion (20); and
an adjusting assembly (40), being affixed to a bottom surface of the leather cushion (20) and having a bolt holder (41) and an adjusting bolt (42), the bolt holder (41) being fixed to a front end of the leather cushion (20) and having a retaining wall (412) and a through hole (414) penetrating the retaining wall (412), the adjusting bolt (42) having a bolt head (422) and a threaded trunk (424), the bolt head (422) abutting against the retaining wall (412) of the bolt holder (41) and being rotatably received in the through hole (414) of the bolt holder (41), and the threaded trunk (424) having one end connected to the bolt head (422), and an opposite end screwed into the threaded hole (532) of the fastening block (53) of the rail (50);
**characterized in that** the bolt holder (41) has two opposite laterals each provided with a contacting portion (416), and the fastening block (53) of the rail (50) has two opposite laterals each provided with a guiding step (534), in which the guiding steps (534) contact the contacting portions (416) of the bolt holder (41) closely and slidably.

7. The bicycle saddle (10) of claim 6, wherein the rail (50) having two opposite supporting arms (52) and a propping portion (51), the propping portion (51) being fixed to the rear end of the leather cushion (20) and having two salients (312), each said salient (312) having a fixing hole (314), each said supporting arm (52) having a rear end provided with an inserting segment (322) and a flange (324) adjacent to the inserting segment (322), and the inserting segment (322) being inserted into the fixing hole (314) of the salient (312) of the propping portion (51) so that the flange (324) abuts against an end surface of the corresponding salient (312) of the propping portion (51).

8. The bicycle saddle (10) of claim 7, wherein each said supporting arm (52) of the rail (50) has a peripheral groove (326) formed around the inserting segment (322), and the rail (50) further has two C-clips (33), in which each said C-clip (33) being inlaid in one said peripheral groove (326) and abuts against a wall of the fixing hole (314) of the corresponding salient (312) of the propping portion (51).

## Patentansprüche

1. Fahrradsattel (10), welcher umfasst:
ein Lederpolster (20);
eine Schiene (30), die das Lederpolster (20) von unten unterstützt, und ein hinteres Ende aufweist, das an einem hinteren Ende des Lederpolsters (20) befestigt ist; und
einen Anpassungsaufbau (40), der an einer unteren Oberfläche des Lederpolsters (20) befestigt ist, und eine Bolzenaufnahme (41), einen Einstellungsbolzen (42), und einen Einstellsitz (43) aufweist, worin die Bolzenaufnahme (41) an einem vorderen Ende des Lederpolsters (20) befestigt ist, und eine Stützwand (412) und ein durch die Stützwand (412) gehendes Durchgangsloch (414) aufweist, worin der Einstellungsbolzen (42) einen Bolzenkopf (422) und einen Gewindestamm (424) aufweist, worin der Bolzenkopf (422) gegen die Stützwand (412) der Bolzenaufnahme (41) stößt und drehbar in einem Durchgangsloch (414) der Bolzenaufnahme (41) aufgenommen ist, worin der Gewindestamm (424) ein mit dem Bolzenkopf (422) verbundenes Ende aufweist, und worin der Einstellungssitz (43) ein Gewindeloch (455) aufweist, das mit dem Gewindestamm (424) des Einstellungsbolzens (42) in Eingriff kommt und diesen aufnimmt;
**dadurch gekennzeichnet, dass**
die Schiene (30) ein vorderes Ende aufweist, das mit einem sich aufwärts erstreckenden Bereich (34) und einer Rückhaltebucht (35) versehen ist, die durch den sich aufwärts erstreckenden Bereich (34) definiert ist;
worin der Einstellsitz (43) an dem sich aufwärts erstreckenden Bereich (34) der Schiene (30) befestigt ist und durch die Rückhaltebucht (35) der Schiene (30) zurück gehalten wird; und
worin der Einstellsitz (43) einen Sitzkörper (44) und eine Buchse mit Innengewinde (45) aufweist, worin der Sitzkörper (44) gegen eine Seite des sich aufwärts erstreckenden Bereichs (34) der Schiene (30) stößt und ein Axialloch (441) aufweist, worin das Axialloch (441) mit der Rückhaltebucht (35) der Schiene (30) in Verbindung steht, worin die Buchse mit Innengewinde (45) einen Buchsenkopf (451) und einen mit dem Buchsenkopf (451) verbundenen Buchsenstamm (453) aufweist, worin der Buchsenkopf (451) gegen eine Rückseite des sich aufwärts ersteckenden Bereichs (34) der Schiene (30) stößt, worin der Buchsenstamm (453) durch die Rückhaltebucht (35) der Schiene (30) geht und sodann in dem Axialloch (441) des Sitzkörpers (44) befestigt aufgenommen wird, worin die Buchse mit Innengewinde (45) das Gewindeloch (455) aufweist, und worin das Gewindeloch (455) durch den Buchsenkopf (451) und den Buchsenstamm (453) geht.

2. Fahrradsattel (10) nach Anspruch 1, worin die Schiene (30) zwei gegenüberliegende Stützarme (32) aufweist, worin die zwei Stützarme (32) vordere Enden aufweisen, die miteinander verbunden sind, um den sich aufwärts erstreckenden Bereich (34) auszubilden, worin der Sitzkörper (44) des Einstellsitzes (43) eine Unterseite aufweist, die mit zwei nebeneinander angeordneten Führungskanälen (443) versehen ist, und worin die Stützarme (32) passgenau in den Führungskanälen (443) aufgenommen sind.

3. Fahrradsattel (10) nach Anspruch 2, worin die Schiene (30) weiter einen Stützbereich (31) aufweist, worin der Stützbereich (31) an dem hinteren Ende des Lederpolsters (20) befestigt ist und zwei Vorsprünge (312) aufweist, worin jeder der Vorsprünge (312) ein Befestigungsloch (314) aufweist, worin jeder Stützarm (32) ein hinteres Ende aufweist, das ein Einsetzelement (322) und eine an das Einsetzelement (322) angrenzende Flansch (324) aufweist, worin die Einsetzelemente (322) in den Befestigungslöchern (314) der Vorsprünge (312) des Stützbereichs (31) eingesetzt sind, und worin die Flansche (324) gegen Endoberflächen der Vorsprünge (312) des Stützbereichs (31) stoßen.

4. Fahrradsattel (10) nach Anspruch 3, worin jeder Stützarm (32) der Schiene (30) eine Umfangsrille (326) aufweist, die um das Einsetzelement (322) ausgebildet ist, und worin die Schiene (30) weiter zwei C-Clips (33) umfasst, die jeweils in eine der Umfangsrillen (326) eingelegt sind und gegen eine Wand der Befestigungsloches (314) des entsprechenden Vorsprungs (312) des Stützbereichs (31) stoßen.

5. Fahrradsattel (10) nach Anspruch 1, worin die Bolzenaufnahme (41) zwei gegenüberliegende Seiten aufweist, die jeweils mit einem Kontaktbereich (416) versehen sind, und worin der Sitzkörper (44) des Einstellsitzes (43) zwei abgewandte Seiten aufweist, die jeweils mit einer Führungsstufe (445) versehen sind, worin die Führungsstufen (445) mit den Kontaktbereichen (416) der Bolzenaufnahme (41) nah und gleitend in Kontakt kommen.

6. Fahrradsattel (10), der umfasst:
ein Lederpolster (20);
eine Schiene (50), die das Lederpolster (20) von unten unterstützt, worin die Schiene (50) ein vorderes Ende aufweist, das mit einem Befestigungsblock (53) versehen ist, der ein Gewindeloch (532) aufweist, und worin die Schiene (50) ein hinteres Ende aufweist, das an dem hinteren Ende des Lederpolsters (20) befestigt ist; und
ein Anpassungsaufbau (40), der an einer unteren Oberfläche des Lederpolsters (20) befestigt ist und der eine Bolzenaufnahme (41) und einen Einstellungsbolzen (42) aufweist, worin die Bolzenaufnahme (41) an einem vorderen Ende des Lederpolsters (20) befestigt ist und eine Stützwand (412) und ein Durchgangsloch (414) aufweist, das durch die Stützwand (412) geht, worin der Einstellungsbolzen (42) einen Bolzenkopf (422) und einen Gewindestamm (424) aufweist, worin der Bolzenkopf (422) gegen die Stützwand (412) der Bolzenaufnahme (41) stößt und in dem Durchgangsloch (414) der Bolzenaufnahme (41) drehbar aufgenommen ist, und worin der Gewindestamm (424) ein mit dem Bolzenkopf (422) verbundenes Ende, und ein abgewandtes Ende aufweist, das in das Gewindeloch (532) des Befestigungsblocks (53) der Schiene (50) geschraubt ist;
**dadurch gekennzeichnet, dass**
die Bolzenaufnahme (41) zwei gegenüberliegende Seiten aufweist, die jeweils mit einem Kontaktbereich (416) versehen sind, und worin der Befestigungsblock (53) der Schiene (50) zwei abgewandte Seiten aufweist, die jeweils mit einer Führungsstufe (534) versehen sind, worin die Führungsstufen (534) mit den Kontaktbereichen (416) der Bolzenaufnahme (41) nah und gleitend in Kontakt kommen.

7. Fahrradsattel (10) nach Anspruch 6, worin die Schiene (50) zwei gegenüberliegende Stützarme (52) und einen Stützbereich (51) aufweist, worin der Stützbereich (51) an dem hinteren Ende des Lederpolsters (20) befestigt ist und zwei Vorsprünge (312) aufweist, worin jeder Vorsprung (312) ein Befestigungsloch (314) aufweist, worin jeder Stützarm (52) ein hinteres Ende aufweist, das mit einem Einsetzelement (322) und einem an das Einsetzelement (322) angrenzenden Flansch (324) versehen ist, und worin die Einsetzelemente (322) in den Befestigungslöchern (314) der Vorsprünge (312) des Stützbereichs (31) eingesetzt sind, so dass der Flansch (324) gegen eine Endoberfläche des entsprechenden Vorsprungs (312) des Stützbereiches (51) stößt.

8. Fahrradsattel (10) nach Anspruch 7, worin jeder Stützarm (52) der Schiene (50) eine Umfangsrille (326) aufweist, die um das Einsetzelement (322) ausgebildet ist, und worin die Schiene (50) weiter zwei C-Clips (33) aufweist, worin jeder C-Clip (33) in eine der Umfangsrillen (326) eingesetzt ist und gegen eine Wand des Befestigungsloches (314) des entsprechenden Vorsprungs (312) des Stützbereiches (51) stößt.

## Revendications

1. Selle de bicyclette (10), comprenant :
un coussin en cuir (20) ;
un rail (30), supportant le coussin en cuir (20) par le dessous et possédant une extrémité arrière fixée à une extrémité arrière du coussin en cuir (20) ; et
un ensemble de réglage (40) fixé à une surface inférieure du coussin en cuir (20) et possédant un support de boulon (41), un boulon de réglage (42) et un siège de réglage (43), le support de boulon (41) étant fixé à une extrémité avant du coussin en cuir (20) et possédant une paroi de retenue (412) et un trou traversant (414) pénétrant dans la paroi de retenue (412), le boulon de réglage (42) possédant une tête de boulon (422) et un tronc fileté (424), la tête de boulon (422) venant en butée contre la paroi de retenue (412) du support de boulon (41) et étant logée de manière à pouvoir tourner dans le trou traversant (414) du support de boulon (41), le tronc fileté (424) possédant une extrémité reliée à la tête de boulon (422) et le siège de réglage (43) possédant un trou fileté (455) qui vient en prise avec et reçoit le tronc fileté (424) du boulon de réglage (42) ;
**caractérisée en ce que** le rail (30) possède une extrémité avant pourvue d'une partie s'étendant vers le haut (34) et un arc de retenue (35) défini par la partie s'étendant vers le haut (34) ;
le siège de réglage (43) est fixé à la partie s'étendant vers le haut (34) du rail (30) et retenu par l'arc de retenue (35) du rail (30) ; et
le siège de réglage (43) possède un corps de siège (44) et une douille à filetage interne (45), le corps de siège (44) venant en butée contre un côté de la partie s'étendant vers le haut (34) du rail (30) et possédant un trou axial (441), le trou axial (441) étant en communication avec l'arc de retenue (35) du rail (30), la douille à filetage interne (45) possédant une tête de douille (451) et un tronc de douille (453) relié à la tête de douille (451), la tête de douille (451) venant en butée contre un côté opposé de la partie s'étendant vers le haut (34) du rail (30), le tronc de douille (453) passant à travers l'arc de retenue (35) du rail (30) et étant ensuite logé de manière fixe dans le trou axial (441) du corps de siège (44), la douille à filetage interne (45) possédant le trou fileté (455) et le trou fileté (455) passant à travers la tête de douille (451) et le tronc de douille (453).

2. Selle de bicyclette (10) selon la revendication 1, le rail (30) possédant deux bras de support opposés (32), les deux bras de support (32) possédant des extrémités avant correspondantes reliées ensemble pour former la partie s'étendant vers le haut (34), le corps de siège (44) du siège de réglage (43) possédant un fond pourvu de deux canaux de guidage côte à côte (443) et les bras de support (32) étant logés de manière ajustée dans les canaux de guidage (443).

3. Selle de bicyclette (10) selon la revendication 2, le rail (30) possédant en outre une partie de soutien (31), la partie de soutien (31) étant fixée à l'extrémité arrière du coussin en cuir (20) et possédant deux éléments saillants (312), chacun desdits éléments saillants (312) possédant un trou de fixation (314), chacun desdits bras de support (32) possédant une extrémité arrière qui possède un segment d'insertion (322) et une bride (324) adjacente au segment d'insertion (322), les segments d'insertion (322) étant insérés dans les trous de fixation (314) des éléments saillants (312) de la partie de soutien (31) et les brides (324) venant en butée contre des surfaces d'extrémité des éléments saillants (312) de la partie de soutien (31).

4. Selle de bicyclette (10) selon la revendication 3, chacun desdits bras de support (32) du rail (30) possédant une rainure périphérique (326) formée autour du segment d'insertion (322) et le rail (30) comprenant en outre deux attaches en C (33), chacune desdites attaches étant placée dans une dite rainure périphérique (326) et venant en butée contre une paroi du trou de fixation (314) de l'élément saillant correspondant (312) de la partie de soutien (31).

5. Selle de bicyclette (10) selon la revendication 1, le support de boulon (41) possédant deux côtés latéraux opposés pourvus chacun d'une partie de contact (416) et le corps de siège (44) du siège de réglage (43) possédant deux côtés latéraux opposés pourvus chacun d'un palier de guidage (445), les paliers de guidage (445) étant en contact avec les parties de contact (416) du support de boulon (41) de manière étroite et coulissante.

6. Selle de bicyclette (10), comprenant :
un coussin en cuir (20) ;
un rail (50), supportant le coussin en cuir (20) par le dessous, le rail (50) possédant une extrémité avant pourvue d'un bloc de fixation (53) qui possède un trou fileté (532) et le rail (50) possédant une extrémité arrière fixée à un extrémité arrière du coussin en cuir (20) ; et un ensemble de réglage (40) fixé à une surface inférieure du coussin en cuir (20) et possédant un support de boulon (41) et un boulon de réglage (42), le support de boulon (41) étant fixé à une extrémité avant du coussin en cuir (20) et possédant une paroi de retenue (412) et un trou traversant (414) pénétrant dans la paroi de retenue (412), le boulon de réglage (42) possédant une tête de boulon (422) et un tronc fileté (424), la tête de boulon (422) venant en butée contre la paroi de retenue (412) du support de boulon (41) et étant logée de manière à pouvoir tourner dans le trou traversant (414) du support de boulon (41) et le tronc fileté (424) possédant une extrémité reliée à la tête de boulon (422) et une extrémité opposée vissée dans le trou fileté (532) du bloc de fixation (53) du rail (50) ;
**caractérisé en ce que**
le support de boulon (41) possède deux côtés latéraux opposés, chacun étant pourvu d'une partie de contact (416), et le bloc de fixation (53) du rail (50) présente deux côtés latéraux opposés, chacun étant pourvu d'un palier de guidage (534), les paliers de guidage (534) étant en contact avec les parties de contact (416) du support de boulon (41) de manière étroite et coulissante.

7. Selle de bicyclette (10) selon la revendication 6, le rail (50) possédant deux bras de support opposés (52) et une partie de soutien (51), la partie de soutien (51) étant fixée à l'extrémité arrière du coussin en cuir (20) et possédant deux éléments saillants (312), chacun desdits éléments saillants (312) possédant un trou de fixation (314), chacun desdits bras de support (52) possédant une extrémité arrière pourvue d'un segment d'insertion (322) et d'une bride (324) adjacente au segment d'insertion (322) et le segment d'insertion (322) étant inséré dans le trou de fixation (314) de l'élément saillant (312) de la partie de soutien (51) de sorte que la bride (324) vient en butée contre une surface d'extrémité de l'élément saillant correspondant (312) de la partie de soutien (51).

8. Selle de bicyclette (10) selon la revendication 7, chacun desdits bras de support (52) du rail (50) possédant une rainure périphérique (326) formée autour du segment d'insertion (322) et le rail (50) possédant en outre deux attaches en C (33), chacune desdites attaches en C (33) étant placée dans une dite rainure périphérique (326) et venant en butée contre une paroi du trou de fixation (314) de l'élément saillant correspondant (312) de la partie de soutien (51).
